# EUROPEAN PATENT SPECIFICATION

(11) **EP 0 706 545 B1**
(45) Date of publication and mention of the grant of the patent: **05.03.1997**
(21) Application number: 94920148.7
(22) Date of filing: 13.06.1994
(51) Int. Cl.: C09D 167/00, C09D 5/03

(54) **THERMOSETTING COATING COMPOSITIONS**
HITZEHÄRTBARE ÜBERZUGSMITTEL
COMPOSITIONS DE REVETEMENT THERMODURCISSABLES

(30) Priority: 01.07.1993 US 84104
(43) Date of publication of application: 17.04.1996
(73) Proprietor: EASTMAN CHEMICAL COMPANY, Kingsport, TN 37660 (US)
(72) Inventor: CHANG, Yeong-Ho, Kingsport, TN 37660 (US); CHOU, Chun-Tzer, Kingsport, TN 37663 (US); BARBEE, Robert, B., Kingsport, TN 37663 (US)
(74) Representative: Wibbelmann, Jobst, Dr., Dipl.-Chem.
(86) International application number: US9406563
(87) International publication number: WO9501406

(56) References cited:
- EP-A- 0 322 834
- EP-A- 0 516 375
- XVI TH INTERN. CONFERENCE IN ORGANIC COATINGS SCIENCE AND TECHNOLOGY, 1990 pages 234 - 249 ANDREW MERCURIO 'New perspectives on hydroxyamide crosslinkers' cited in the application

## Description

This invention belongs to the field of powder coating compositions. In particular, this invention relates to certain catalysts useful in powder coating compositions which utilize a β-Hydroxyalkylamide crosslinker.

Plastic materials used in the manufacture of powder coatings are classified broadly as either thermosetting or thermoplastic. In the application of thermoplastic powder coatings, heat is applied to the coating on the substrate to melt the particles of the powder coating and thereby permit the particles to flow together and form a smooth coating.

Thermosetting coatings, when compared to coatings derived from thermoplastic compositions, generally are tougher, more resistant to solvents and detergents, have better adhesion to metal substrates and do not soften when exposed to elevated temperatures. However, the curing of thermosetting coatings has created problems in obtaining coatings which have, in addition to the above-stated desirable characteristics, good smoothness and flexibility. Coatings prepared from thermosetting powder compositions, upon the application of heat, may cure or set prior to forming a smooth coating, thereby resulting in a relatively rough finish referred to as an "orange peel" surface. Such a coating surface or finish lacks the gloss and luster of coatings typically obtained from thermoplastic compositions. The "orange peel" surface problem has caused many to apply thermosetting coatings compositions from organic solvent systems which are inherently undesirable because of the environmental and safety problems that may be occasioned by the evaporation of the solvent system. Solvent-based coating compositions also suffer from the disadvantage of relatively poor percent utilization; i.e., in some modes of application, only 60 percent or less of the solvent-based coating composition being applied contacts the article or substrate being coated. Thus, a substantial portion of solvent-based coatings can be wasted since that portion which does not contact the article or substrate being coated obviously cannot be easily reclaimed.

In addition to exhibiting good gloss, impact strength and resistance to solvents and chemicals, coatings derived from thermosetting coating compositions must possess good to excellent flexibility. For example, good flexibility is essential for powder coating compositions used to coat sheet (coil) steel which is destined to be formed or shaped into articles used in the manufacture of various household appliances and automobiles wherein the sheet metal is flexed or bent at various angles.

This invention provides a thermosetting powder coating composition comprised of an aliphatic carboxyl resin, a bis(N,N-dihydroxyalkyl)adipamide (e.g., PRIMID XL552) and a divalent catalyst such as zinc stearate. PRIMID XL552 is currently sold by Rohm and Haas as a crosslinker for powder coating compositions. Rohm & Haas has advertised that its coating has similar weatherability to a triglycidyl isocyanurate (TGIC) system and that PRIMID has relatively low toxicity. Powder coatings with PRIMID thus can be a potential replacement for a polyester-urethane (PU) or a TGIC system. Since its introduction, resins such as RUCOTE 915 (Ruco) and GRILESTA V76-12 (EMS) have been sold for use with PRIMID.

While commercial polyesters based on aromatic diacids cure well with PRIMID, the aliphatic counterparts generally cure much slower. For example, an aliphatic polyester based on 1,4-cyclohexanedicarboxylic acid (CHDA) and 2,2,4,4-tetra-methyl-1,3-cyclobutanediol or based on 1,4-CHDA and hydrogenated bisphenol A formulated with PRIMID exhibits a gel time of about 250 seconds measured at 204°C. (Gel time in general is related to the cure requirement (i.e., the temperature/cure time combination).) We have found that certain salts, particularly zinc salts, catalyze this reaction and are useful in reducing the gel time of thermosetting powder coating compositions which utilize a β-hydroxyalkyl amide curing agent.

U. S. Patent No. 4,988,767 describes a powder coating based on a β-hydroxyalkyl amide curing agent and a first acid group containing acrylic polymer having a Tg -20 to 30°C and a second acid-group containing acrylic polymer having a Tg 40 to 100°C.

FR 2,585,714 and EP 194904 describe a powder coating based on an acid functional resin and an epoxy resin catalyzed by an acetate salt of Li, Zn, Mg or tetraethyl ammonium bromide and an accelerator including 1-methyl, 2-phenyl, 2-isopropyl imidazole to give a coating with good appearance, no discoloration and good mechanical properties, while curing at relatively lower temperatures.

U.S. Patent 4,145,370 teaches that zinc oxide improves the impact strength of a powder coating based on a carboxyl polyester/epoxy system.

J. Lomax and G. Swift claim that conventional acidic and basic catalysts do not reduce cure temperature, in "β-Hydroxyalkylamides, low polluting crosslinkers for carboxyl containing polymers"; J. Coatings Technology, Vol. 50, No. 643, 49-55, 1978).

Z. Wicks and N. C. Chiang found that reaction of N-2-hydroxyalkylamides with carboxylic acids was not acid catalyzed. (Esterification of N(2-hydroxyalkyl) amides; J. Coatings Technology, Vol. 54, No. 686, 27-31, 1982).

Z. Wicks, M. R. Appelt and J. C. Soleim claim the lack of acid catalysis of the esterification of acyclic amide alcohols is confirmed (Reaction of N-(2-hydroxyethyl) amido compounds; J. Coatings Technology, Vol. 57, No. 726, 51-61, 1985).

A. Mercurio of Rohm and Haas Co., the manufacturer of bis(N,N-dihydroxyethyl)adipamide, further notes that "Unfortunately, all attempts to catalyze the reactions have been unsuccessful as indicated in Table 3(B). Wicks, et al. confirm this lack of catalyzability". XVIth International Conference in Organic Coatings Science and Technology, pp 235-249, 1990.

The present invention provides thermosetting powder coating compositions comprised of an aliphatic carboxyl resin, a β-hydroxyalkyl amide crosslinker, and a catalyst comprised of a C₁-C₁₈ carboxylate salt of a metal selected from the group consisting of zinc, aluminum, and titanium, or an oxide of zinc or aluminum. Preferably, the aliphatic resin is comprised of residues of 1,4-Cyclohexanedicarboxylic acid (CHDA) and 2,2,4,4-tetramethyl-1,3-cyclobutanediol or comprised of 1,4-CHDA and hydrogenated bisphenol A. We have found that these catalysts are useful in significantly reducing gel time, which is itself a measure of the cure temperature and cure time requirements for a given resin/crosslinker system.

The present invention provides a thermosetting powder coating composition, which comprises
(a) a carboxyl functional aliphatic polyester;
(b) a β-hydroxyalkyl amide crosslinker; and
(c) a catalyst comprised of a C₁-C₁₈ carboxylate salt of a metal selected from the group consisting of zinc, aluminum, and titanium, or an oxide of zinc or aluminum.

As a further aspect of the invention, there is provided a method for curing a thermosetting powder coating composition comprised of
(a) a carboxyl functional aliphatic polyester; and
(b) a β-hydroxyalkyl amide crosslinker;
which comprises curing said composition in the presence of a catalytic amount of a catalyst comprised of a C₁-C₁₈ carboxylate salt of a metal selected from the group consisting of zinc, aluminum, and titanium, or an oxide of zinc or aluminum.

As a further aspect of the present invention, there is provided a C₁-C₁₈ carboxylate salt of a metal selected from the group consisting of zinc, aluminum, and titanium, or an oxide of zinc or aluminum for use as a catalyst in a thermosetting powder coating composition comprised of
(a) a carboxyl functional aliphatic polyester; and
(b) a β-hydroxyalkyl amide crosslinker.

In the above composition, the carboxyl functional aliphatic polyester is preferably comprised of about 100 mole percent of residues of cyclohexanedicarboxylic acid as the diacid component of the polyester.

In another embodiment of the present invention, the carboxyl functional aliphatic polyester is comprised of about 30 to about 99 mole percent of residues of cyclohexanedicarboxylic acid, and about 30 to about 99 mole percent of a cycloaliphatic diol. Up to about 70 mole percent of the diacid residues may be comprised of acids such as terephthalic acid, isophthalic acid, adipic acid, and the like, and up to about 70 mole percent of the diol residues may be comprised of diol residues such as 2,2-dimethyl-1,3-propanediol (neopentyl glycol), 1,4-cyclohexanedimethanol, ethylene glycol, and the like, or substituted with triol residues such as trimethylolpropane and glycerol. The polyesters preferably have an acid number of 20 to 80, most preferably from about 30 to about 40, for crosslinking. Preferably, the hydroxyl number is less than about 15. They preferably have a Tg of higher than 40°C, most preferably 55°C or higher. In a further preferred embodiment of the present invention, the carboxyl functional aliphatic polyester consists essentially of residues of cyclohexanedicarboxylic acid and the diol residue is selected from residues of hydrogenated bisphenol A, 2,2,4,4-tetramethyl-1,3-cyclobutanediol, and 1,4-cyclohexanediol.

In general, the β-hydroxyalkyl amide crosslinker is a compound of the structure 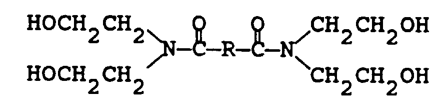 wherein R is a C₁-C₁₂ alkylene group.

The preferred crosslinker is bis(N,N-dihydroxyethyl)adipamide, marketed by Rohm & Haas under the name PRIMID XL552.

In our experiments, as shown below, an aliphatic polyester based on 1,4-Cyclohexanedicarboxylic acid (CHDA) and 18-glycol or based on 1,4-CHDA and hydrogenated bisphenol A formulated with PRIMID exhibits a gel time of 250 seconds measured at 204°C. We have found that some selected salts, particularly zinc salts, catalyze this reaction and reduce gel time. The salts may be divalent or trivalent, particularly those that serve the capacity of a Lewis acid, preferably salts of zinc, aluminum, and titanium, most preferably zinc.

The catalysts of the present invention are preferably carboxylic acid salts of zinc, aluminum, and titanium. Examples of preferred salts include zinc stearate, zinc acetate, zinc oxide, and titanium isopropoxide. Zinc stearate is the most highly preferred catalyst.

The powder coating compositions of this invention may be prepared from the compositions described herein by dry-mixing and then melt-blending component (a) and the cross-linking compound (b), the cross-linking catalyst (c), along with other optional additives commonly used in powder coatings, and then grinding the solidified blend to a particle size, e.g., an average particle size in the range of about 10 to 300 microns, suitable for producing powder coatings. For example, the ingredients of the powder coating composition may be dry blended and then melt blended in a Brabender extruder at 90° to 130°C, granulated and finally ground.

The powder coating compositions preferably contain a flow aid, also referred to as flow control or leveling agents, to enhance the surface appearance of cured coatings of the powder coating compositions. Such flow aids typically comprise acrylic polymers and are available from several suppliers, e.g., MODAFLOW from Monsanto Company and ACRONAL from BASF. Other flow control agents which may be used include MODAREZ MFP available from SYNTHRON, EX 486 available from Troy Chemical, BYK 360P available from BYK Mallinkrodt and PERENOL F-30-P available from Henkel. An example of one specific flow aid is an acrylic polymer having a molecular weight of about 17,000 and containing 60 mole percent 2-ethylhexyl methacrylate residues and about 40 mole percent ethyl acrylate residues. The amount of flow aid present may preferably be in the range of about 0.5 to 4.0 weight percent, based on the total weight of the resin component, and the cross-linking agent.

The powder coating compositions may be deposited on various metallic and non-metallic (e.g., thermoplastic or thermoset composite) substrates by known techniques for powder deposition such as by means of a powder gun, by electrostatic deposition or by deposition from a fluidized bed. In fluidized bed sintering, a preheated article is immersed into a suspension of the powder coating in air. The particle size of the powder coating composition normally is in the range of 60 to 300 microns. The powder is maintained in suspension by passing air through a porous bottom of the fluidized bed chamber. The articles to be coated are preheated to about (250° to 400°F) about 121° to 205°C and then brought into contact with the fluidized bed of the powder coating composition. The contact time depends on the thickness of the coating that is to be produced and typically is from 1 to 12 seconds. The temperature of the substrate being coated causes the powder to flow and thus fuse together to form a smooth, uniform, continuous, uncratered coating. The temperature of the preheated article also effects cross-linking of the coating composition and results in the formation of a tough coating having a good combination of properties. Coatings having a thickness between 200 and 500 microns may be produced by this method.

The compositions also may be applied using an electrostatic process wherein a powder coating composition having a particle size of less than 100 microns, preferably about 15 to 50 microns, is blown by means of compressed air into an applicator in which it is charged with a voltage of 30 to 100 kV by high-voltage direct current. The charged particles then are sprayed onto the grounded article to be coated to which the particles adhere due to the electrical charge thereof. The coated article is heated to melt and cure the powder particles. Coatings of 40 to 120 microns thickness may be obtained.

Another method of applying the powder coating compositions is the electrostatic fluidized bed process which is a combination of the two methods described above. For example, annular or partially annular electrodes are mounted in the air feed to a fluidized bed so as to produce an electrostatic charge such as 50 to 100 kV. The article to be coated, either heated, e.g., (250° to 400°F) 121° to 205°C, or cold, is exposed briefly to the fluidized powder. The coated article then can be heated to effect cross-linking if the article was not preheated to a temperature sufficiently high to cure the coating upon contact of the coating particles with the article.

The powder coating compositions of this invention may be used to coat articles of various shapes and sizes constructed of heat-resistance materials such as glass, ceramic and various metal materials. The compositions are especially useful for producing coatings on articles constructed of metals and metal alloys, particularly steel articles. As noted above, since the compositions provided by the present invention cure at temperatures as low as 115°C, it is also possible to coat many thermoplastic and thermosetting resin compositions with the compositions of the present invention.

Further examples of formulation methods, additives, and methods of powder coating application may be found in User's Guide to Powder Coating, 2nd Ed., Emery Miller, editor, Society of Manufacturing Engineers, Dearborn, (1987).

The compositions and coatings of this invention are further illustrated by the following examples.

The inherent viscosity (I.V.), in dL/g are determined in phenol/tetrachloroethane (60/40 w/w) at a concentration of 0.5 g/100 mL at a temperature of 25°C.

The resin melt viscosity, in poise, are determined using an ICI melt viscometer at 200°C. The acid number and hydroxyl number are determined by titration and reported as mg of KOH consumed for each gram of resin.

The glass transition temperature (Tg), crystallization temperature on heating (Tch) and Melting temperatures (Tm) are determined by differential scanning calorimetry (DSC) on the second heating cycle at a scanning rate of 20°C/minute after the sample has been heated to melt and quenched to below the resin Tg. Tg values are reported as midpoint and Tch and Tm at peaks and valleys of transitions.

The weight average molecular weight (Mw) and number average molecular weight (Mn) are determined by gel permeation chrommatography in tetrahydrofuran (THF) using polystyrene standard and a UV detector.

Impact strengths are determined using a Gardner Laboratory,Inc., impact tester per ASTM D 2794-84. Pencil hardness is determined using ASTM D 3363-74. The hardness is reported as the hardest pencil which will not cut into the coating. The results are expressed according to the following scale: (softest) 6B, 5B, 4B, 3B, 2B, B, HB, F, H, 2H, 3H, 4H, 5H, 6H (hardest).

The conical mandrel is performed using a Gardener Laboratory Inc., conical mandrel of specified size according to ASTM-522. The 20 and 60 degree gloss are measured using a gloss meter (Gardener Laboratory, Inc. Model GC-9095) according to ASTM D-523.

The '0-T bend' test is performed by bending panel back to itself with no thickness between the two halves using a hydraulic jack pressurized to 20,000 psi. The panel is inspected for crack or popping at the bent. Any cracking or popping at the bent is rated fail.

Gel times are determined on a hot plate maintained at 204°C. A spoonful of powder is placed and agitated with a tongue depresser on a hot plate to a size of about 2 x 2 square inches. The depressor is held flat on the plate and periodically lifted up to check for fluidity of the melt. The melt begins as fluid stringy flow which forms fibrous strings with the lifted depressor. The strings become easily broken and snapped off from the depressor. Gel time measures the time it takes from start to the point when the melt turns solid and easily snaps off from the depressor.

The 1,4-CHDA as used below generally has a cis/trans ratio of about 60/40.

### EXAMPLES

### 1. Carboxyl Resin CA

To a 3000 ml, 3-neck round bottom flask were added hydrogenated bisphenol A (726.5 g, 3.027 moles), 2,2-dimethyl-1,3-propanediol (326.4 g, 2.847 moles) and trimethylolpropane (24.3 g, 0.183 moles) and FASCAT 4100 monobutyl tin catalyst, M&T Chemicals Inc. (1.8 g). The contents were heated to melt at 180°C. 1,4-Cyclohexanedicarboxylic acid (951.7 g, 5.526 moles) was added. The flask was swept with 1.0 scfh nitrogen while the temperature was raised from 180°C to 230°C over a 6-hour period. The batch temperature was maintained at 230°C for 8 hours. The resulting resin has an acid number of 3 mg KOH/g and an ICI melt viscosity of 15 poise at 200°C. 1,4-Cyclohexanedicarboxylic acid (238.2 g) was added at 230°C and the melt was agitated at 230°C for 4 hours. The molten resin was poured into a syrup can where it cooled to a solid with the following properties:

| | |
|---|---|
| I.V. | 0.174 dl/g |
| ICI Melt Viscosity at 200°C | 31 poise |
| Acid Number | 47 |
| Hydroxyl number | 5 |
| DSC (2nd cycle) | |
| Tg | 60°C |
| Gel permeation chromatography | |
| Mw | 6,263 |
| Mn | 1,904 |

### 2. Carboxyl Resin CB

A 3000 mL, 3-necked, round bottom flask equipped with a stirrer, a short distillation column, and an inlet for nitrogen, was charged with dimethyl cyclohexanedicarboxylate (1280.8 g, 6.40 mol), 1,4-butanediol (692.9 g, 7.683 mol, 10% excess), and 100 ppm of titanium tetraisopropoxide in 2-propanol. The flask and contents were heated under nitrogen atmosphere to a temperature of 170°C at which point methanol began to distill rapidly from the flask. After the reaction mixture was heated with stirring at this temperature for about 1 hour, the temperature was increased to 200°C for 2 hours, raised to 215°C for 4 hours, and then to 235°C. After 3 hours at this temperature, a vacuum of 10 mm of mercury was applied over a period of 12 minutes. Stirring was continued under 10 mm of mercury at 235°C for about 3 hours to produce a low melt viscosity, colorless polymer. The resulting polymer was cooled to 200°C and 1,4-cyclohexanedicarboxylic acid (228.7 g, 1.33 mol) was added. Heating with stirring was continued for about 4 hours to produce a resin with an inherent viscosity of 0.21, a melting point of 134°C, an acid number of 47, and a molecular weight by GPC of 2200.
Powder coating composition Examples 1 through 7.
Powder coatings from 50/50 Resin CA/CB and β-hydroxyalkylamide.

Resin CA (186 g), Resin CB (186 g), PRIMID XL552 (28.0 g), MODAFLOW 2000 flow aid (6.0 g), benzoin (1.0 g), TINUVIN 144 (6.0 g), TINUVIN 234 (6.0 g), and titanium dioxide (200.0 g) were mixed in a Vitamix mixer and compounded in an APV extruder at 130°C. The extrudate was cooled, granulated, and pulverized in a Bantam mill with liquid nitrogen bled into the grinding chamber. The powder was classified through a 200 mesh screen. The powder coating described above was mixed with specified amount of catalyst in a Micromill for about 1 minute and the gel time of the resulting powder was determined. The table below demonstrates that gel time changes with variety and amount of catalyst.

| **POWDER #** | **CATALYST** | **WT% CONCENTRATION** | **GEL TIME SECONDS** |
|---|---|---|---|
| 1 | None (control) | 0 | 235 |
| 2 | Zinc Acetate | 1.0 | 147 |
| 3 | Zinc Acetate | 2.0 | 137 |
| 4 | Zinc Stearate | 1.0 | 189 |
| 5 | Zinc Stearate | 3.6 | 156 |
| 6 | Titanium Isopropoxide | 1.0 Ti | 128 |
| 7 | Zinc Oxide | 1.0 | 163 |

Thermosetting powder coating composition Examples 8 through 11. Powder coatings from 50/50 Resin CA/CB, β-hydroxyalkylamide and zinc stearate coextruded.

Resin CA (372 g), Resin CB (372 g), PRIMID XL552 (56.0 g), zinc stearate (amount specified in table below), MODAFLOW 2000 (12.0 g), benzoin (2.0 g), TINUVIN 144 (12.0 g), TINUVIN 234 (12.0 g), and titanium dioxide (400.0 g) were mixed in a Henschel mixer and compounded in an ZSK 30 extruder. The extruder temperature profile was Feed zone = 110°C, die zone = 110°C, and a screw speed of 400 rpm. The extrudate was cooled through a chill roll, granulated and pulverized using a Bantam mill with liquid nitrogen bled into the grinding chamber. The powder was classified through a 200 mesh screen. Gel time taken from these powders are listed below.

| **POWDER #** | **CATALYST** | **GRAM** | **GEL TIME SECONDS** |
|---|---|---|---|
| 8 | None (control) | 0 | 245 |
| 9 | Zinc Acetate | 12.0 | 188 |
| 10 | Zinc Stearate | 12.0 | 197 |
| 11 | Zinc Stearate | 43.0 | 169 |

Thermosetting powder coating composition examples 12 through 14; Powder coating from Commercial RUCOTE 915 and β-hydroxyalkylamide

Carboxyl RUCOTE 915 (379.0 g), PRIMID XL552 (21.0 g), MODAFLOW III (4.0 g), benzoin (1.0 g), TINUVIN 144 (6.0 g), TINUVIN 234 (6.0 g), and titanium dioxide (200.0 g) were mixed in a Vitamix mixer and compounded in an APV extruder at 130°C. The extrudate was cooled, granulated, and pulverized in a Bantam mill with liquid nitrogen bled into the grinding chamber. The powder was classified through a 200 mesh screen.

The powder coating compositions described above were mixed with a specified amount of catalyst in a Micromill for about 1 minute and the gel time of the resultant powder was determined.

| **POWDER #** | **CATALYST** | **WT% CONCENTRATION** | **GEL TIME SECONDS** |
|---|---|---|---|
| 12 | None (control) | 0 | 74 |
| 13 | Zinc Acetate | 1.0 | 82 |
| 14 | Zinc Sulfate | 1.0 | 92 |
| 15 | Aluminum Acetate | 1.0 | 77 |

## Claims

1. A thermosetting powder coating composition, which comprises
(a) a carboxyl functional aliphatic polyester;
(b) a β-hydroxyalkyl amide crosslinker; and
(c) a catalyst comprised of a C₁-C₁₈ carboxylate salt of a metal selected from the group consisting of zinc, aluminum, and titanium, or an oxide of zinc or aluminum.

2. The thermosetting powder coating composition of claim 1, wherein the carboxyl functional aliphatic polyester has an acid number of 20 to 80, and a Tg of greater than 55°C.

3. The thermosetting powder coating composition of claim 1 or 2, wherein the carboxyl functional aliphatic polyester is comprised of residues of cyclohexanedicarboxylic acid and a diol.

4. The thermosetting powder coating composition of any one of claims 1 to 3, wherein the carboxyl functional aliphatic polyester consists essentially of residues of cyclohexanedicarboxylic acid, and the diol is selected from the group consisting of hydrogenated bisphenol A, 2,2,4,4-tetra-methyl-1,3-cyclobutanediol, and 1,4-cyclohexanediol.

5. The thermosetting powder coating composition of claim 4, wherein the β-hydroxyalkyl amide crosslinker is bis(N,N-dihydroxyethyl)adipamide.

6. The thermosetting powder coating composition of any one of claims 1-5, wherein the C₁-C₁₈ carboxylate salt is selected from the group consisting of formate, acetate, butyrate, laurate, and stearate.

7. The thermosetting powder coating composition of claim 1 or 6, wherein the metal is zinc.

8. A method for curing a thermosetting powder coating composition comprised of
(a) a carboxyl functional aliphatic polyester; and
(b) a β-hydroxyalkyl amide crosslinker;
which comprises curing said composition in the presence of a catalytic amount of a catalyst comprised of a C₁-C₁₈ carboxylate salt of a metal selected from the group consisting of zinc, aluminum, and titanium, or an oxide of zinc or aluminum.

9. A shaped or formed article coated with the composition of claim 1 and thereafter cured.

10. The use of a C₁-C₁₈ carboxylate salt of a metal selected from the group consisting of zinc, aluminum, and titanium, or an oxide of zinc or aluminum as a catalyst in a thermosetting powder coating composition comprised of
(a) a carboxyl functional aliphatic polyester; and
(b) a β-hydroxyalkyl amide crosslinker.

## Patentansprüche

1. Wärmehärtbare Pulverbeschichtungszusammensetzung aus
(a) einem Carboxyl-funktionalen, aliphatischen Polyester;
(b) einem β-Hydroxyalkylamid-Quervernetzer und
(c) einem Katalysator, bestehend aus C₁-C₁₈-Carboxylatsalzen eines Metalls, ausgewählt aus der Gruppe bestehend aus Zink, Aluminium und Titan oder einem Oxid des Zinks oder Aluminiums.

2. Wärmehärtbare Pulverbeschichtungszusammensetzung nach Anspruch 1, worin der Carboxyl-funktionale, aliphatische Polyester eine Säurezahl von 20 bis 80 und eine Tg von größer als 55°C hat.

3. Wärmehärtbare Pulverbeschichtungszusammensetzung nach Anspruch 1 oder 2, worin der Carboxyl-funktionale, aliphatische Polyester aus Resten der Cyclohexandicarbonsäure und eines Diols besteht.

4. Wärmehärtbare Pulverbeschichtungszusammensetzung nach einem der Ansprüche 1 bis 3, worin der Carboxyl-funktionale, aliphatische Polyester im wesentlichen aus Resten der Cyclohexandicarbonsäure besteht und das Diol ist ausgewählt aus der Gruppe bestehend aus hydriertem Bisphenol A, 2,2,4,4-Tetra-methyl-1,3-cyclobutandiol und 1,4-Cyclohexandiol.

5. Wärmehärtbare Pulverbeschichtungszusammensetzung nach Anspruch 4, worin der β-Hydroxyalkylamid-Quervernetzer bis(N,N-dihydroxyethyl)adipinsäureamid ist.

6. Wärmehärtbare Pulverbeschichtungszusammensetzung nach einem der Ansprüche 1 bis 5, worin das C₁-C₁₈-Carboxylatsalz ausgewählt ist aus der Gruppe bestehend aus Format, Acetat, Butyrat, Laurat und Stearat.

7. Wärmehärtbare Pulverbeschichtungszusammensetzung nach Anspruch 1 oder 6, worin das Metall Zink ist.

8. Verfahren zur Härtung einer wärmehärtbaren Pulverbeschichtungszusammensetzung aus
(a) einem Carboxyl-funktionalen, aliphatischen Polyester und
(b) einem β-Hydroxyalkylamid-Quervernetzer;
umfassend das Härten dieser Zusammensetzung in Gegenwart einer katalytischen Menge eines Katalysators bestehend aus einem C₁-C₁₈-Carboxylatsalz eines Metalls ausgewählt aus der Gruppe bestehend aus Zink, Aluminium und Titan oder einem Oxid des Zinks oder Aluminiums.

9. Gestalteter oder geformter Gegenstand, der mit einer Zusammensetzung nach Anspruch 1 beschichtet und im Anschluß daran gehärtet wurde.

10. Verwendung eines C₁-C₁₈-Carboxylatsalzes eines Metalls, ausgewählt aus der Gruppe bestehend aus Zink, Aluminium und Titan oder einem Oxid des Zinks oder Aluminiums als Katalysator in einer wärmehärtbaren Pulverbeschichtungszusammensetzung aus
(a) einem Carboxyl-funktionalen, aliphatischen Polyester und
(b) einem β-Hydroxyalkylamid-Quervernetzer.

## Revendications

1. Composition pulvérulente de revêtement thermodurcissable, qui comprend :
(a) un polyester aliphatique comportant un groupe fonctionnel carboxyle ;
(b) un agent de réticulation de type β-hydroxyalkylamide ; et
(c) un catalyseur constitué d'un sel, de type carboxylate en C₁-C₁₈, d'un métal choisi dans l'ensemble consistant en le zinc, l'aluminium et le titane, ou d'un oxyde de zinc ou d'aluminium.

2. Composition pulvérulente de revêtement thermodurcissable selon la revendication 1, dans laquelle le polyester aliphatique à groupe fonctionnel carboxyle présente un indice d'acide de 20 à 80 et une température de transition vitreuse, T_{V}, supérieure à 55°C.

3. Composition pulvérulente de revêtement thermodurcissable selon la revendication 1 ou 2, dans laquelle le polyester aliphatique à groupe fonctionnel carboxyle est constitué de restes de l'acide cyclohexanedicarboxylique et d'un diol.

4. Composition pulvérulente de revêtement thermodurcissable selon l'une quelconque des revendications 1 à 3, dans laquelle le polyester aliphatique à groupe fonctionnel carboxyle consiste essentiellement en des restes d'acide cyclohexanedicarboxylique et le diol est choisi dans l'ensemble consistant en du bisphénol A hydrogéné, le 2,2,4,4-tétraméthyl-1,3-cyclobutanediol et le 1,4-cyclohexanediol.

5. Composition pulvérulente de revêtement thermodurcissable selon la revendication 4, dans laquelle l'agent de réticulation de type β-hydroxyalkylamide est du bis(N,N-dihydroxyéthyl)adipamide.

6. Composition pulvérulente de revêtement thermodurcissable selon l'une quelconque des revendications 1 à 5, dans laquelle le sel de type carboxylate en C₁-C₁₈ est choisi dans l'ensemble consistant en du formiate, de l'acétate, du butyrate, du laurate et du stéarate.

7. Composition pulvérulente de revêtement thermodurcissable selon la revendication 1 ou 6, dans laquelle le métal est le zinc.

8. Procédé pour faire durcir une composition pulvérulente de revêtement thermodurcissable, constituée de :
(a) un polyester aliphatique à groupe fonctionnel carboxyle ; et
(b) un agent de réticulation de type β-hydroxyalkylamide,
qui comprend le durcissement de ladite composition en présence d'une quantité catalytique d'un catalyseur constitué par un sel, de type carboxylate en C₁-C₁₈, d'un métal choisi dans l'ensemble consistant en le zinc, l'aluminium et le titane ou par un oxyde de zinc ou d'aluminium.

9. Article façonné ou conformé, revêtu de la composition selon la revendication 1 qui a été ensuite soumis à durcissement.

10. Utilisation d'un sel, de type carboxylate en C₁-C₁₈, d'un métal choisi dans l'ensemble consistant en le zinc, l'aluminium et le titane ou d'un oxyde de zinc ou d'aluminium, comme catalyseur dans une composition pulvérulente de revêtement thermodurcissable constituée de :
(a) un polyester aliphatique à groupe fonctionnel carboxyle ; et
(b) un agent de réticulation de type β-hydroxyalkylamide.
